(19)

Europäisches Patentamt

European Patent Office

Office européen des brevets

(11) **EP 4 434 639 A1**

(12) **EUROPEAN PATENT APPLICATION**
published in accordance with Art. 153(4) EPC

(43) Date of publication:
**25.09.2024 Bulletin 2024/39**

(21) Application number: **22895413.7**

(22) Date of filing: **28.10.2022**

(51) International Patent Classification (IPC):
**B05D 1/26** (2006.01)   **B05D 1/36** (2006.01)
**B05D 3/00** (2006.01)   **B05D 5/06** (2006.01)
**C09D 201/00** (2006.01)   **C09D 7/61** (2018.01)
**C09D 7/65** (2018.01)

(52) Cooperative Patent Classification (CPC):
**B05D 1/26; B05D 1/36; B05D 3/00; B05D 5/06;
C09D 7/61; C09D 7/65; C09D 201/00**

(86) International application number:
**PCT/JP2022/040487**

(87) International publication number:
**WO 2023/090130 (25.05.2023 Gazette 2023/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.11.2021  JP 2021188057**

(71) Applicant: **Kansai Paint Co., Ltd.
Amagasaki-shi, Hyogo 661-8555 (JP)**

(72) Inventors:
• **SUGAMOTO, Keiji
  Hiratsuka-shi, Kanagawa 254-8562 (JP)**
• **NAGAI, Akinori
  Hiratsuka-shi, Kanagawa 254-8562 (JP)**

(74) Representative: **Gill Jennings & Every LLP
The Broadgate Tower
20 Primrose Street
London EC2A 2ES (GB)**

(54) **PHOTOLUMINESCENT COATING MATERIAL COMPOSITION AND MULTILAYER COATING FILM FORMING METHOD**

(57)    The purpose of the present disclosure is to provide a photoluminescent coating material composition that forms a coating film which has excellent metallic gloss and in which unevenness is unlikely to occur, when being used not only in robotic coating but also in coating using a liquid discharge head in which discharging is controlled by changing the relative distance between a valve body and a discharge port. A photoluminescent coating material composition according to the present disclosure has the following configuration. The photoluminescent coating material composition contains water, a scale-like aluminum pigment (A), and nanocellulose (B). The scale-like aluminum pigment (A) has volume mean particle diameters of d50 within a range of 0.5-8.0 $\mu$m and d90 within a range of 2.0-15.0 $\mu$m.

EP 4 434 639 A1

**Description**

Technical Field

The present disclosure relates to a brilliant coating composition and a multilayer coating film-forming method using the brilliant coating composition.

Background Art

Formation of a multilayer coating film having excellent brightness by an inkjet method has been studied.

For example, Patent Document 1 describes an inkjet recording method (Claim 1). The method includes an image formation process of forming an image by discharging an effect pigment ink onto a target recording medium, a transparent ink providing process of providing a transparent ink on the target recording medium, and a curing process of curing the effect pigment ink and the transparent ink on the target recording medium, in this order. The method is characterized in that a process of curing the effect pigment ink is not included between the image formation process and the transparent ink providing process, or in the case where the effect pigment ink curing process is included between the image formation process and the transparent ink providing process, a curing rate of the effect pigment ink is 85% or less, the transparent ink contains a polymerization initiator and a polymerizable compound and contains substantially no pigment, and the effect pigment ink contains an effect pigment, a polymerization initiator, and a polymerizable compound.

Patent Document 1 describes that the effect pigment ink is formed by an inkjet method (paragraph [0020]) and that the effect pigment is preferably aluminum or an aluminum alloy (paragraph [0104]).

Patent Document 2 describes a decorative structure in which brilliance of a brilliance material contained in a brilliant coating film is visible through an ink layer, and a production method of the structure.

The decorative structure according to Patent Document 2 is a decorative structure including a substrate, a brilliant coating film formed on the substrate, and a transparent ink layer formed on the brilliant coating film, and the brilliant coating film contains a brilliance material having an average particle diameter of 3 to 100 $\mu$m (Claim 1).

Citation List

Patent Document

Patent Document 1: JP 2012-210764 A
Patent Document 2: JP 2015-193143 A

Summary of Invention

Technical Problem

The inkjet recording method according to Patent Document 1, which involves application of an effect pigment ink by an inkjet method, causes a problem in that nozzle clogging tends to occur when the effect pigment ink is discharged, as described in paragraph [0005] of Patent Document 2.

In the decorative structure according to Patent Document 2, the brilliant coating film itself is not formed through application of the brilliance material by an inkjet method, and the brightness of the film is maintained by the transparent ink layer provided on the brilliant coating film.

An object of the present disclosure is to provide a brilliant coating composition that forms a coating film having excellent metallic luster with reduced mottling when the brilliant coating composition is applied not only by robotic coating, but also by coating with a liquid discharge head that controls discharging by varying a relative distance between a valve and a discharge port.

Solution to Problem

The inventors of the present disclosure have found a brilliant coating composition containing water, a scale-like aluminum pigment (A), and nanocellulose (B), wherein the scale-like aluminum pigment (A) has a volume average particle diameter d50 in a range of 0.5 to 8.0 $\mu$m and a volume average particle diameter d90 in a range of 2.0 to 15.0 $\mu$m.

Advantageous Effects of Invention

The brilliant coating composition of the present disclosure forms a coating film having excellent metallic luster with reduced mottling when the brilliant coating composition is applied not only by robotic coating, but also by coating with a liquid discharge head that controls discharging by varying a relative distance between a valve and a discharge port.

Description of Embodiments

Specifically, the present disclosure relates to the following aspects.

Aspect 1

A brilliant coating composition containing water, a scale-like aluminum pigment (A), and nanocellulose (B), wherein the scale-like aluminum pigment (A) has a volume average particle diameter d50 in a range of 0.5 to 8.0 $\mu$m and a volume average particle diameter d90 in a range of 2.0 to 15.0 $\mu$m.
Since the scale-like aluminum pigment (A) in the brilliant coating composition has a predetermined volume average particle diameter, the brilliant coating composition forms a coating film having excellent metallic luster with reduced mottling when the brilliant coating composition is applied not only by robotic coating, but also by coating with a liquid discharge head that controls discharging by varying a relative distance between a valve and a discharge port.
Furthermore, since the scale-like aluminum pigment (A) has a predetermined volume average particle diameter, the brilliant coating composition exhibits excellent discharge stability when the brilliant coating composition is applied by coating with a liquid discharge head that controls discharging by varying a relative distance between a valve and a discharge port.
The metallic luster means a texture of a coated plate characterized by a surface without particle feeling, like a specular surface, as well as brightness (highlight) when viewed in a direction substantially perpendicular to the coated plate and darkness (shade) when viewed in an obliquely downward direction to the coated plate; i.e., a large difference in luminance between the highlight area and the shade area.

Aspect 2

The brilliant coating composition according to Aspect 1, wherein the scale-like aluminum pigment (A) has an average thickness in a range of 1 to 100 nm.
Since the scale-like aluminum pigment (A) in the brilliant coating composition has a predetermined average thickness, a coating film formed from the brilliant coating composition has excellent metallic luster.

Aspect 3

The brilliant coating composition according to Aspect 1 or 2, further containing an acrylic resin (C).
Since the brilliant coating composition further contains an acrylic resin (C), a coating film formed from the brilliant coating composition has excellent metallic luster.

Aspect 4

The brilliant coating composition according to any one of Aspects 1 to 3, which is applied by using a liquid discharge head that controls discharging by varying a relative distance between a valve and a discharge port.
Since the brilliant coating composition is applied by using the predetermined liquid discharge head, the brilliant coating composition exhibits excellent discharge stability when discharged from the liquid discharge head, and a coating film formed from the brilliant coating composition has excellent metallic luster with reduced mottling.

Aspect 5

The brilliant coating composition according to any one of Aspects 1 to 4, wherein the nanocellulose (B) contains at least one type selected from cellulose nanofibers (B1) and cellulose nanocrystals (B2).
Since the nanocellulose (B) in the brilliant coating composition contains at least one type selected from cellulose nanofibers (B1) and cellulose nanocrystals (B2), a coating film formed from the brilliant coating composition has excellent metallic luster. In the case where the brilliant coating composition is applied by using a liquid discharge head that controls discharging by varying a relative distance between a valve and a discharge port, the brilliant coating composition exhibits excellent discharge stability.

Aspect 6

The brilliant coating composition according to any one of Aspects 1 to 5, which has a solid content concentration in a range of 1.0 to 15.0 mass%.

Since the brilliant coating composition has the predetermined solid content concentration, the brilliant coating composition exhibits excellent coating stability when applied (in particular, discharge stability when the composition is discharged from a liquid discharge head), and a coating film formed from the brilliant coating composition has excellent metallic luster.

Aspect 7

A method of forming a multilayer coating film, the method including:

step 1: forming a brilliant coating film on a coating object by applying the brilliant coating composition described in any one of Aspects 1 to 6 onto the coating object by proximal discharging with a liquid discharge head that controls discharging by varying a relative distance between a valve and a discharge port; and
step 2: forming a clear coating film by applying a clear coating composition onto the brilliant coating film.

The method of forming a multilayer coating film achieves excellent discharge stability of the brilliant coating composition and achieves excellent metallic luster of a coating film formed from the brilliant coating composition.

Aspect 8

The method of forming a multilayer coating film according to Aspect 7, wherein the brilliant coating film has a dry film thickness in a range of 0.5 to 2.0 μm.

Since the brilliant coating film has a dry film thickness in the predetermined range, the method of forming a multilayer coating film can form a multilayer coating film having excellent metallic luster with reduced mottling.

The brilliant coating composition and the method of forming a multilayer coating film using the brilliant coating composition (hereinafter, the method may be simply referred to as "multilayer coating film-forming method") of the present disclosure will be described in detail below.

Brilliant coating composition

The brilliant coating composition of the present disclosure contains water, a scale-like aluminum pigment (A), and nanocellulose (B).

Scale-Like Aluminum Pigment (A)

The scale-like aluminum pigment (A) has d50 (volume average particle diameter) in a range of 0.5 to 8.0 μm, preferably 0.5 to 6.0 μm, and more preferably 0.5 to 4.0 μm. The scale-like aluminum pigment (A) has d90 (volume average particle diameter) required to be greater than d50 (volume average particle diameter) and has d90 in a range of 2.0 to 15.0 μm, preferably 2.0 to 10.0 μm, and more preferably 2.0 to 7.0 μm.

Thus, a coating film formed from the brilliant coating composition has excellent metallic luster with reduced mottling. Furthermore, in the case where the brilliant coating composition is applied by using a liquid discharge head that controls discharging by varying a relative distance between a valve and a discharge port, the brilliant coating composition exhibits excellent discharge stability.

d50 (volume average particle diameter) and d90 (volume average particle diameter) can be determined by measuring a volume-based particle diameter distribution by the laser diffraction/scattering method using a submicron particle diameter distribution analyzer "Microtrac MT3000" (trade name, available from MicrotracBEL).

Examples of the scale-like aluminum pigment (A) include a milling-type scale-like aluminum pigment and a vapor deposition-type scale-like aluminum pigment.

The milling-type scale-like aluminum pigment is usually produced by grinding or milling aluminum in a ball mill or an attritor mill using a grinding aid in the presence of a grinding medium. Examples of the grinding aid used in the production process of the milling-type scale-like aluminum pigment include higher fatty acids such as oleic acid, stearic acid, isostearic acid, lauric acid, palmitic acid, and myristic acid; aliphatic amines; aliphatic amides; and aliphatic alcohols. Examples of the grinding medium include aliphatic hydrocarbons such as mineral spirits.

The scale-like aluminum pigment (A) can be broadly classified into leafing-type and non-leafing-type scale-like aluminum pigments according to the type of grinding aid. A leafing-type scale-like aluminum pigment incorporated into a brilliant coating composition is oriented (leafing) on the surface of a coating film formed by application of the composition, and achieves a highly metallic finish, thermal reflex, and rust prevention. Thus, a leafing-type scale-like aluminum pigment is often used in plant facilities, such as a tank, a duct, piping, and a roofing material for rooftop, and various building materials.

The scale-like aluminum pigment used in the brilliant coating composition of the present disclosure may be a leafing-type scale-like aluminum pigment. However, in the case where this type of scale-like aluminum pigment is used, the aluminum pigment is oriented on the surface of a coating film, which depends on the amount of incorporation, due to the effect of surface tension of a grinding aid in a coating film formation process, and thus attention is required to adhesiveness with a clear coating film formed above the brilliant coating film. From this viewpoint, a non-leafing-type scale-like aluminum pigment is preferably used.

Examples of the usable non-leafing-type scale-like aluminum pigment include one having an untreated surface, one having a surface coated with a resin, one having a surface treated with silica, and one having a surface treated with phosphoric acid, molybdic acid, or a silane coupling agent.

Examples of the usable scale-like aluminum pigment (A) include colored aluminum pigments, such as an aluminum pigment prepared by coating the surface of a scale-like aluminum pigment with a color pigment and then coating the color pigment with a resin, and an aluminum pigment prepared by coating the surface of a scale-like aluminum pigment with a metal oxide such as iron oxide.

The scale-like aluminum pigment (A) has an average thickness of preferably from 1 to 100 nm, more preferably from 2 to 60 nm, and even more preferably from 3 to 50 nm. Thus, a coating film formed from the brilliant coating composition has excellent metallic luster.

The average thickness is defined as an average of 100 or more measurement values obtained by observing a cross section of a coating film containing the scale-like aluminum pigment (A) with a microscope and measuring the thickness using image processing software.

As the scale-like aluminum pigment (A), a vapor-deposition-type scale-like aluminum pigment is preferably employed from the viewpoint of metallic luster of a coating film formed from the brilliant coating composition. The vapor-deposition-type scale-like aluminum pigment can be produced by vapor depositing an aluminum film onto a base substrate and peeling off the base substrate, and then grinding the vapor-deposited aluminum film. Examples of the base substrate include films.

The vapor-deposition-type scale-like aluminum pigment that can be employed is a single-layer-type pigment having a single layer of vapor-deposited aluminum film, as well as a multilayer-type pigment having a layer of another metal or metal oxide in addition to a single layer of vapor-deposited aluminum film.

The vapor-deposition-type scale-like aluminum pigment may be any surface-treated vapor-deposition-type scale-like aluminum pigment. From the viewpoint of storage stability of an effect pigment dispersion, the use of a silica-treated vapor-deposition-type scale-like aluminum pigment is particularly preferred.

From the viewpoint of forming a coating film having excellent metallic luster, the brilliant coating composition of the present disclosure contains the scale-like aluminum pigment (A) in an amount of preferably from 0.3 to 10.0 mass%, more preferably from 0.7 to 6.5 mass%, and even more preferably from 0.8 to 5.0 mass%, relative to the total mass of the brilliant coating composition. This is because of forming a coating film having excellent metallic luster from the brilliant coating composition.

The solid content of the scale-like aluminum pigment (A) in the brilliant coating composition of the present disclosure is in a range of preferably 30 to 200 parts by mass, more preferably 32 to 150 parts by mass, and even more preferably 35 to 100 parts by mass, relative to 100 parts by mass of the total solid content of components other than the scale-like aluminum pigment (A). This is because of forming a coating film having excellent metallic luster from the brilliant coating composition.

Nanocellulose (B)

The nanocellulose (B) preferably contains at least one type selected from cellulose nanofibers (B 1) and cellulose nanocrystals (B2) and more preferably contains cellulose nanofibers (B 1). This is because a coating film formed from the brilliant coating composition has excellent metallic luster. Furthermore, in the case where the brilliant coating composition is applied by using a liquid discharge head that controls discharging by varying a relative distance between a valve and a discharge port, the brilliant coating composition exhibits excellent discharge stability.

The nanocellulose (B) is produced by disentangling (defibration treatment) of cellulose fiber into nanosized fibers.

Examples of the cellulose fiber include natural cellulose fiber, regenerated cellulose fiber, semi-synthetic cellulose fiber, and modified cellulose fiber.

The natural cellulose fiber is produced by removing impurities from a naturally occurring cellulose fiber-containing material through a purification process. Examples of the natural cellulose fiber-containing material include woody materials such as coniferous trees and broadleaf trees, cotton materials such as cotton linter and cotton lint, sugar cane pomace and sugar beet pomace, bast fibers such as flax, ramie, jute, and kenaf, vein fibers such as sisal and pineapple fibers, petiole fibers such as abaca and banana fibers, fruit fibers such as coconut fiber, stem fibers such as bamboo fiber, bacterial cellulose produced by bacteria, sea weeds such as valonia and cladophora, and ascidian tunica.

Examples of the regenerated cellulose fiber include rayon and cupra. Examples of the semi-synthetic cellulose fiber include acetate.

The modified cellulose fiber used may be produced by subjecting cellulose to any type of chemical modification. Examples of the type of chemical modification include carboxymethylation, acylation, esterification such as phosphorylation, oxidation such as carboxylation, sulfonation, fluorination, cationization, and treatment with a silane coupling agent.

The nanocellulose (B) may be subjected to the above-described chemical modification after the defibration treatment.

The nanocellulose (B) may be neutralized with a neutralizer. The neutralization by the neutralizer improves water adhesion resistance of the nanocellulose (B) such as cellulose nanofiber. For example, when the modified cellulose fiber is produced by oxidation (hereinafter the cellulose will be referred to as "oxidized cellulose"), the neutralizer may be a neutralizer of an organic base which is bulkier than an inorganic metal base such as sodium hydroxide.

Examples of preferred neutralizers include quaternary ammonium salts, and organic bases such as amines (primary amines, secondary amines, and tertiary amines). The quaternary ammonium salt is preferably quaternary ammonium hydroxide. Examples of the amines include alkylamines and alcoholamines. Examples of the alkylamines include N-butylamine, N-octylamine, dibutylamine, and triethylamine. Examples of the alcoholamines include N-butylethanolamine, N-methylethanolamine, 2-amino-2-methyl-1-propanol, dimethylethanolamine, dibutylethanolamine, and methyldiethanolamine.

The content of the neutralizer is not particularly limited so long as the neutralizer is contained in such an amount that a portion or the entirety of the oxidized cellulose can be neutralized, and the content is preferably from 0.2 to 1.0 equivalent in terms of neutralization equivalent relative to the contained acid groups.

The nanocellulose (B) preferably has a number average fiber diameter in a range of 1 to 500 nm.

The nanocellulose (B) preferably has a number average length in a range of 10 to 10000 nm.

The number average fiber diameter and number average length of the nanocellulose (B) can be determined by SEM analysis. For example, the diameters and lengths of 50 fibers of the nanocellulose (B) are measured, and the number average fiber diameter or the number average length can be calculated as an average value.

An aspect ratio of the nanocellulose (B), i.e., the ratio of the number average length to the number average fiber diameter (number average length/number average fiber diameter) is preferably in a range of 3 to 10000, and more preferably in a range of 5 to 500, from the viewpoints of metallic luster of a coating film formed from the brilliant coating composition, and discharge stability of the brilliant coating composition.

In the present specification, the cellulose nanofibers (B 1) have an aspect ratio of 50 or more.

In the present specification, the cellulose nanocrystals (B2) have an aspect ratio of less than 50.

The cellulose nanofibers (B1) can be produced by a known method. For example, the cellulose nanofibers (B 1) can be produced by defibrating a cellulose raw material and pulverizing the cellulose raw material until the resultant fibers have a nanosized fiber diameter. Examples of the defibration treatment method of the cellulose raw material include mechanical defibration treatment, and chemical treatment such as treatment with an oxidation catalyst solution containing an N-oxyl compound.

The cellulose raw material is not particularly limited so long as it contains cellulose, and examples thereof include any wood pulp, non-wood pulp, bacterial cellulose, regenerated cellulose, wastepaper pulp, cotton, valonia cellulose, and ascidian cellulose. Various commercially available cellulose powders or microcrystalline cellulose powders may also be used.

The cellulose nanofibers (B1) used may be subjected to any type of chemical modification. Examples of the type of chemical modification include carboxymethylation, acylation, esterification such as phosphorylation, oxidation such as carboxylation, sulfonation, fluorination, cationization, and treatment with a silane coupling agent. The cellulose nanofibers (B1) may be neutralized with a neutralizer. The neutralizer used may be, for example, any of the neutralizers illustrated in the description of the nanocellulose (B).

The cellulose nanofibers (B1) have a number average fiber diameter preferably in a range of 1 to 500 nm, more preferably in a range of 1 to 250 nm, and particularly preferably in a range of 2 to 50 nm, from the viewpoints of metallic luster of a coating film formed from the brilliant coating composition, and discharge stability of the brilliant coating composition.

The cellulose nanofibers (B1) have a number average length preferably in a range of 200 to 10000 nm, more preferably in a range of 200 to 5000 nm, particularly preferably in a range of 300 to 2500 nm, and more particularly preferably in a range of 200 to 1000 nm, from the viewpoints of metallic luster of a coating film formed from the brilliant coating composition, and discharge stability of the brilliant coating composition.

The aspect ratio of the cellulose nanofibers (B1) is preferably in a range of 50 to 500, more preferably in a range of 50 to 200, and particularly preferably in a range of 50 to 150, from the viewpoints of metallic luster of a coating film formed from the brilliant coating composition, and discharge stability of the brilliant coating composition.

Examples of commercially available products of the cellulose nanofibers (B1) include "Nanocellulose Fiber" (available from Chuetsu Pulp & Paper Co., Ltd.), "BiNFi-s" (available from Sugino Machine Limited), "RHEOCRYSTA" (available from DKS Co., Ltd.), "Cellulose Nanofiber" (available from Mori Machinery Corporation), "Cellenpia" (available from Nippon Paper Industries Co., Ltd.), and "AUROVISCO" (available from Oji Holding Corporation).

The cellulose nanocrystals (B2) can be produced by a known method. For example, the cellulose nanocrystals (D2) can be produced by treating a cellulose raw material with an acid such as sulfuric acid to hydrolyze and remove non-crystalline portions, followed by a mechanical defibration treatment.

The cellulose raw material is not particularly limited so long as it contains cellulose, and the same cellulose raw material as that of the cellulose nanofiber (B 1) described above can be used. The mechanical defibration treatment is not particularly limited, and can be performed by a method known in the related art, for example, a method using an apparatus such as a highpressure homogenizer, an ultrahigh-pressure homogenizer, a ball mill, a roll mill, a cutter mill, a planetary mill, a jet mill, an attritor, a grinder, a juicer-mixer, a homomixer, an ultrasonic homogenizer, a nanogenizer, aqueous counter collision, or a single-screw or twin-screw extruder.

The cellulose nanocrystals (B2) used may be subjected to any type of chemical modification. Examples of the type of chemical modification include carboxymethylation, acylation, esterification such as phosphorylation, oxidation such as carboxylation, sulfonation, fluorination, cationization, and treatment with a silane coupling agent.

The cellulose nanocrystals (B2) may be neutralized with a neutralizer. The neutralizer used may be, for example, any of the neutralizers described in the section of the nanocellulose (B).

The cellulose nanocrystals (B2) have a number average fiber diameter preferably in a range of 1 to 50 nm, more preferably in a range of 1 to 30 nm, particularly preferably in a range of 1 to 15 nm, and more particularly preferably in a range of 1 to 5 nm, from the viewpoints of metallic luster of a coating film formed from the brilliant coating composition, and discharge stability of the brilliant coating composition.

The cellulose nanocrystals (B2) have a number average length preferably in a range of 10 to 500 nm, more preferably in a range of 10 to 300 nm, particularly preferably in a range of 20 to 250 nm, and more particularly preferably in a range of 30 to 150 nm, from the viewpoints of metallic luster of a coating film formed from the brilliant coating composition, and discharge stability of the brilliant coating composition.

The aspect ratio of the cellulose nanocrystals (B2) is preferably 3 or greater and less than 50, more preferably 5 or greater and less than 50, and particularly preferably 10 or greater and less than 50, from the viewpoints of metallic luster of a coating film formed from the brilliant coating composition, and discharge stability of the brilliant coating composition.

Examples of commercially available products of the cellulose nanocrystals (B2) include "Celluforce NCC" (available from Celluforce Inc.).

In the brilliant coating composition of the present disclosure, the solid content of the nanocellulose (B) is preferably in a range of 5 to 60 parts by mass, more preferably in a range of 10 to 50 parts by mass, and even more preferably in a range of 15 to 40 parts by mass, relative to 100 parts by mass of the total of the solid content of components other than the scale-like aluminum pigment (A). This is because of metallic luster of a coating film formed from the brilliant coating composition, and discharge stability of the brilliant coating composition.

From the viewpoints of discharge stability of the resulting brilliant coating composition, and metallic luster of a coating film formed from the composition, the brilliant coating composition of the present disclosure contains the nanocellulose (B) in an amount of preferably from 0.1 to 1.7 mass%, more preferably from 0.4 to 1.3 mass%, and even more preferably from 0.45 to 1.1 mass%, relative to the total mass of the brilliant coating composition.

The brilliant coating composition may further contain a resin. Examples of the resin include an acrylic resin (C), a polyester resin, an alkyd resin, a polyurethane resin, an epoxy resin, a silicone resin, and any combination of these. The resin is preferably an acrylic resin (C). This is because of metallic luster of a coating film formed from the brilliant coating composition.

In the case where the resin is a phosphate group-containing resin, the phosphate group-containing resin is included in a phosphate group-containing compound (D) described below.

The resin is preferably in the form of an emulsion, and examples thereof include an acrylic resin emulsion, a polyester resin emulsion, an alkyd resin emulsion, a polyurethane resin emulsion, an epoxy resin emulsion, a silicone resin emulsion, and any combination of these. Of these, an acrylic resin emulsion is preferred. This is because of metallic luster of a coating film formed from the brilliant coating composition.

The acrylic resin (C) is preferably a hydroxyl group-containing acrylic resin containing at least one hydroxyl group per molecule. The hydroxyl group-containing acrylic resin (C') may be a water-soluble or water-dispersible hydroxyl group-containing acrylic resin known per se that has been used in an aqueous coating material in the related art. The hydroxyl group-containing acrylic resin (C') can be produced, for example, by copolymerizing a hydroxyl group-containing polymerizable unsaturated monomer and an additional polymerizable unsaturated monomer that is copolymerizable with the hydroxyl group-containing polymerizable unsaturated monomer by a method known per se, such as solution polymerization.

The hydroxyl group-containing polymerizable unsaturated monomer is a compound having one or more hydroxyl groups and one or more polymerizable unsaturated bonds per molecule, and examples thereof include monoesterified products of glycol and acrylic acid or methacrylic acid, such as hydroxyethyl (meth)acrylate, hydroxypropyl (meth)acrylate, hydroxybutyl (meth)acrylate, and polyethylene glycol mono(meth)acrylate; and compounds obtained by subjecting a monoesterified product of the polyhydric alcohol and acrylic acid or methacrylic acid to ring-opening polymerization with ε-caprolactone.

The additional polymerizable unsaturated monomer that is copolymerizable with the hydroxyl group-containing polymerizable unsaturated monomer can be appropriately selected and used in accordance with the desired properties of the hydroxyl group-containing acrylic resin (C'). Specific examples of the monomer are as listed below. These resins may be used alone, or in combination of two or more species.

Note that, in the present specification, "(meth)acrylate" means acrylate or methacrylate. "(Meth)acrylic acid" means acrylic acid or methacrylic acid. In addition, "(meth)acryloyl" means acryloyl or methacryloyl. Furthermore, "(meth)acrylamide" means acrylamide or methacrylamide.

(i) Alkyl or cycloalkyl (meth)acrylates: for example, methyl (meth)acrylate, ethyl (meth)acrylate, n-propyl (meth)acrylate, i-propyl (meth)acrylate, n-butyl (meth)acrylate, i-butyl (meth)acrylate, tert-butyl (meth)acrylate, n-hexyl (meth)acrylate, n-octyl (meth)acrylate, 2-ethylhexyl (meth)acrylate, nonyl (meth)acrylate, dodecyl (meth)acrylate, tridecyl (meth)acrylate, stearyl (meth)acrylate, isostearyl (meth)acrylate, cyclohexyl (meth)acrylate, methylcyclohexyl (meth)acrylate, t-butylcyclohexyl (meth)acrylate, cyclododecyl (meth)acrylate, and tricyclodecanyl (meth)acrylate.

(ii) Polymerizable unsaturated monomers having an isobornyl group: for example, isobornyl (meth)acrylate.

(iii) Polymerizable unsaturated monomers having an adamantyl group: for example, adamantyl (meth)acrylate.

(iv) Polymerizable unsaturated monomers having a tricyclodecenyl group: for example, tricyclodecenyl (meth)acrylate.

(v) Aromatic ring-containing polymerizable unsaturated monomers: for example, benzyl (meth)acrylate, styrene, α-methylstyrene, and vinyltoluene.

(vi) Polymerizable unsaturated monomers having an alkoxysilyl group: for example, vinyltrimethoxysilane, vinyltriethoxysilane, vinyltris(2-methoxyethoxy)silane, γ-(meth)acryloyloxypropyltrimethoxysilane, and γ-(meth)acryloyloxypropyltriethoxysilane.

(vii) Polymerizable unsaturated monomers having a fluorinated alkyl group: for example, perfluoroalkyl (meth)acrylates such as perfluorobutylethyl (meth)acrylate and perfluorooctylethyl (meth)acrylate; and fluoroolefins.

(viii) Polymerizable unsaturated monomers having a photopolymerizable functional group such as a maleimide group.

(ix) Vinyl compounds: for example, N-vinylpyrrolidone, ethylene, butadiene, chloroprene, vinyl propionate, and vinyl acetate.

(x) Phosphate group-containing polymerizable unsaturated monomers: for example, 2-acryloyloxyethyl acid phosphate, 2-methacryloyloxyethyl acid phosphate, 2-acryloyloxypropyl acid phosphate, and 2-methacryloyloxypropyl acid phosphate.

(xi) Carboxyl group-containing polymerizable unsaturated monomers: for example, (meth)acrylic acid, maleic acid, crotonic acid, and β-carboxyethyl acrylate.

(xii) Nitrogen-containing polymerizable unsaturated monomers: for example, (meth)acrylonitrile, (meth)acrylamide, N,N-dimethylaminoethyl (meth)acrylate, N,N-diethylaminoethyl (meth)acrylate, N,N-dimethylaminopropyl (meth)acrylamide, methylene bis(meth)acrylamide, ethylene bis(meth)acrylamide, 2-(methacryloyloxy)ethyltrimethylammonium chloride, and an adduct of glycidyl (meth)acrylate and an amine.

(xiii) Polymerizable unsaturated monomers having at least two polymerizable unsaturated groups per molecule: for example, allyl (meth)acrylate and 1,6-hexanediol di(meth)acrylate.

(xiv) Epoxy group-containing polymerizable unsaturated monomers: for example, glycidyl (meth)acrylate, β-methylglycidyl (meth)acrylate, 3,4-epoxycyclohexylmethyl (meth)acrylate, 3,4-epoxycyclohexylethyl (meth)acrylate, 3,4-epoxycyclohexylpropyl (meth)acrylate, and allyl glycidyl ether.

(xv) (Meth)acrylates having a polyoxyethylene chain with an alkoxy group at a molecular terminal.

(xvi) Polymerizable unsaturated monomers having a sulfonate group: for example, 2-acrylamido-2-methylpropanesulfonic acid, 2-sulfoethyl (meth)acrylate, allylsulfonic acid, 4-styrenesulfonic acid, and sodium salts and ammonium salts of these sulfonic acids.

(xvii) Polymerizable unsaturated monomers having a UV-absorbing functional group; for example, 2-hydroxy-4-(3-methacryloyloxy-2-hydroxypropoxy)benzophenone, 2-hydroxy-4-(3-acryloyloxy-2-hydroxypropoxy)benzophenone, 2,2'-dihydroxy-4-(3-methacryloyloxy-2-hydroxypropoxy)benzophenone, 2,2'-dihydroxy-4-(3-acryloyloxy-2-hydroxypropoxy)benzophenone, and 2-(2'-hydroxy-5'-methacryloyloxyethylphenyl)-2H-benzotriazole.

(xviii) Photostable polymerizable unsaturated monomers: for example, 4-(meth)acryloyloxy-1,2,2,6,6-pentamethylpiperidine, 4-(meth)acryloyloxy-2,2,6,6-tetramethylpiperidine, 4-cyano-4-(meth)acryloylamino-2,2,6,6-tetramethylpiperidine, 1-(meth)acryloyl-4-(meth)acryloylamino-2,2,6,6-tetramethylpiperidine, 1-(meth)acryloyl-4-cyano-4-(meth)acryloylamino-2,2,6,6-tetramethylpiperidine, 4-crotonoyloxy-2,2,6,6-tetramethylpiperidine, 4-crotonoylamino-2,2,6,6-tetramethylpiperidine, and 1-crotonoyl-4-crotonoyloxy-2,2,6,6-tetramethylpiperidine.

(xix) Polymerizable unsaturated monomers having a carbonyl group: for example, acrolein, diacetone acrylamide, diacetone methacrylamide, acetoacetoxyethyl methacrylate, formylstyrol, and vinyl alkyl ketones having from 4 to 7 carbons (for example, vinyl methyl ketone, vinyl ethyl ketone, and vinyl butyl ketone).

(xx) Polymerizable unsaturated monomers having an acid anhydride group: for example, maleic anhydride, itaconic anhydride, and citraconic anhydride.

The hydroxyl group-containing acrylic resin (C') has a hydroxyl value of preferably from 10 to 150 mg KOH/g, and more preferably from 15 to 100 mg KOH/g. The hydroxyl group-containing acrylic resin (C') has an acid value of preferably 150 mg KOH/g or less, and more preferably 145 mg KOH/g or less. The hydroxyl group-containing acrylic resin (C') has a weight average molecular weight of preferably from 1000 to 100000, and more preferably from 2000 to 60000.

In the present specification, the weight average molecular weight of the hydroxyl group-containing acrylic resin (C') is a value determined by converting a retention time (retention capacity) measured using a gel permeation chromatograph (GPC) into a molecular weight of polystyrene using a retention time (retention capacity) of standard polystyrene having a known molecular weight measured under the same conditions. Specifically, the measurement can be performed using, as the gel permeation chromatograph, "HLC-8120GPC" (trade name, available from Tosoh Corporation), using four columns "TSKgel G4000HXI,", "TSKgel G3000HXL", "TSKgel G2500HXL", and "TSKgel G2000HXI," (trade names, all available from Tosoh Corporation), and using a differential refractometer as a detector, under conditions of tetrahydrofuran as a mobile phase at a measurement temperature of 40°C and a flow rate of 1 mL/min.

From the viewpoint of forming a coating film having excellent metallic luster, the brilliant coating composition of the present disclosure contains the acrylic resin (C) in an amount of preferably from 0.1 to 20 mass%, more preferably from 0.3 to 10 mass%, and even more preferably from 0.45 to 5 mass%, relative to the total mass of the brilliant coating composition.

In the brilliant coating composition of the present disclosure, the solid content of the acrylic resin (C) is preferably in a range of 10 to 70 parts by mass, more preferably in a range of 15 to 65 parts by mass, and even more preferably in a range of 20 to 60 parts by mass, relative to 100 parts by mass of the total solid content of components other than the scale-like aluminum pigment (A). This is because of forming a coating film having excellent metallic luster.

The brilliant coating composition preferably further contains a phosphate group-containing compound (D). Thus, a coating film formed from the brilliant coating composition tends to have excellent metallic luster. In the case where the brilliant coating composition is applied by using a liquid discharge head that controls discharging by varying a relative distance between a valve and a discharge port, the brilliant coating composition exhibits excellent discharge stability.

Examples of the phosphate group-containing compound (D) include phosphoric acid; monoalkylphosphoric acids such as mono-n-propylphosphoric acid, monoisopropylphosphoric acid, mono-n-butylphosphoric acid, monoisobutylphosphoric acid, mono-tert-butylphosphoric acid, monooctylphosphoric acid, and monodecylphosphoric acid; dialkylphosphoric acids such as di-n-propylphosphoric acid, diisopropylphosphoric acid, di-n-butylphosphoric acid, diisobutylphosphoric acid, di-tert-butylphosphoric acid, dioctylphosphoric acid, and didecylphosphoric acid; monoalkylphosphorous acids such as mono-n-propylphosphorous acid, monoisopropylphosphorous acid, mono-n-butylphosphorous acid, monoisobutylphosphorous acid, mono-tert-butylphosphorous acid, monooctylphosphorous acid, and monodecylphosphorous acid; dialkylphosphorous acids such as di-n-propylphosphorous acid, diisopropylphosphorous acid, di-n-butylphosphorous acid, diisobutylphosphorous acid, di-tert-butylphosphorous acid, dioctylphosphorous acid, and didecylphosphorous acid; alkyl ether phosphoric acids; polyoxyethylene alkyl ether phosphoric acids; phosphate group-containing resins; and any combination of these.

The phosphate group-containing compound (D) is preferably a phosphate group-containing resin or a phosphate ester. The phosphate group-containing resin is preferred from the viewpoints of water resistance and chipping resistance. The phosphate ester is preferred from the viewpoints of storage stability of the brilliant coating composition and metallic luster of a coating film formed from the brilliant coating composition.

Examples of the phosphate group-containing resin include a phosphate group-containing acrylic resin, a phosphate group-containing polyester resin, a phosphate group-containing polyether resin, a phosphate group-containing polycarbonate resin, a phosphate group-containing polyurethane resin, and a phosphate group-containing epoxy resin. The phosphate group-containing resin is preferably a phosphate group-containing acrylic resin. This is because of water resistance and chipping resistance of a coating film formed from the brilliant coating composition.

The phosphate group-containing acrylic resin can be synthesized by copolymerizing a phosphate group-containing polymerizable unsaturated monomer with an additional polymerizable unsaturated monomer by a known method.

Examples of the phosphate group-containing polymerizable unsaturated monomer include polymerizable unsaturated monomers having a phosphate group, such as acid phosphoxyethyl (meth)acrylate, acid phosphoxypropyl (meth)acrylate, acid phosphoxypoly(oxyethylene) glycol (meth)acrylate, and acid phosphoxypoly(oxypropylene) glycol (meth)acrylate.

In the phosphate group-containing acrylic resin, the content of the phosphate group-containing polymerizable unsaturated monomer is preferably from 1 to 50 mass%, and particularly preferably from 5 to 40 mass%, relative to the total amount of the monomer components constituting the phosphate group-containing acrylic resin.

From the viewpoints of finished appearance and coating performance, the phosphate group-containing acrylic resin has a weight average molecular weight in a range of preferably 3000 to 30000, more preferably 5000 to 25000, and even more preferably 10000 to 20000.

In the brilliant coating composition of the present disclosure, the solid content of the phosphate group-containing compound (D) is preferably in a range of 10 to 60 parts by mass, more preferably in a range of 15 to 55 parts by mass, and even more preferably in a range of 20 to 50 parts by mass, relative to 100 parts by mass of the total solid content of components other than the scale-like aluminum pigment (A).

The brilliant coating composition of the present disclosure contains the phosphate group-containing compound (D) in an amount of preferably from 0.1 to 1.7 mass%, more preferably from 0.4 to 1.3 mass%, and even more preferably from 0.45 to 1.1 mass%, relative to the total mass of the brilliant coating composition.

In the case where the phosphate group-containing compound (D) is a phosphate group-containing acrylic resin, the phosphate group-containing acrylic resin is not included in the acrylic resin (C).

The brilliant coating composition may further contain a curing agent that is reactive with the resin. Examples of the curing agent include an amino resin, a polyisocyanate compound, a blocked polyisocyanate compound, an epoxy group-containing compound, a carboxyl group-containing compound, a carbodiimide group-containing compound, a hydrazide group-containing compound, and a semicarbazide group-containing compound. Among these, the curing agent is preferably an amino resin, a polyisocyanate compound, or a blocked polyisocyanate compound, which is reactive with a hydroxyl group, or a carbodiimide group-containing compound, which is reactive with a carboxyl group.

The brilliant coating composition has a solid content concentration of preferably from 1.0 to 15.0 mass%, more preferably from 1.5 to 10.0 mass%, and even more preferably from 2.0 to 8.0 mass%. This is because of metallic luster of a coating film formed from the brilliant coating composition and reduced mottling of the coating film. The brilliant coating composition has excellent coating stability during application thereof, and the brilliant coating composition exhibits excellent discharge stability when the brilliant coating composition is applied by using a liquid discharge head that controls discharging by varying a relative distance between a valve and a discharge port.

In the present specification, the solid content concentration can be calculated by weighing a measuring object (e.g., the brilliant coating composition) into a heat-resistant container such as an aluminum foil cup, spreading the measuring object on the bottom surface of the container, then drying the measuring object at 110°C for 1 hour, weighing the mass of the components remaining in the measuring object after drying, and determining the ratio of the mass of the components remaining in the measuring object after drying to the total mass of the measuring object before drying.

The brilliant coating composition may contain, as necessary, any coating additive such as an organic solvent, a thickener, a curing catalyst, an ultraviolet absorber, a light stabilizer, an antifoaming agent, a plasticizer, a surface conditioner, and an antisettling agent.

The brilliant coating composition of the present disclosure can be applied by a method known in the art without particular limitation, and the composition can be applied by using a liquid discharge head that controls discharging by varying a relative distance between a valve and a discharge port. Thus, the brilliant coating composition exhibits excellent discharge stability when the composition is applied by using the liquid discharge head.

Examples of the liquid discharge head that controls discharging by varying a relative distance between a valve and a discharge port include a liquid discharge head that discharges the brilliant coating composition by reducing a relative distance between a valve and a discharge port, and a liquid discharge head that discharges the brilliant coating composition by increasing a relative distance between a valve and a discharge port.

Examples of the liquid discharge head include on-demand types (e.g., piezo type, thermal type, and valve type) and continuous types. Of these, an on-demand type, particularly a piezo type, is preferred. This is because of excellent dischargeability of a high-viscosity brilliant coating composition.

Examples of the piezo-type liquid discharge head include Piezo Jet Dispenser X JET (model adaptable to a high-viscosity liquid) available from SSI JAPAN.

Multilayer Coating Film-Forming Method

The multilayer coating film-forming method of the present disclosure includes the following steps.

- Step 1: forming a brilliant coating film on a coating object by applying a predetermined brilliant coating composition onto the coating object by proximal discharging with a liquid discharge head that controls discharging by varying a relative distance between a valve and a discharge port.
- Step 2: forming a clear coating film by applying a clear coating composition onto the brilliant coating film.

The liquid discharge head that controls discharging by varying a relative distance between a valve and a discharge port is described as in the section of "brilliant coating composition".

The dry film thickness of a brilliant coating film formed from the brilliant coating composition varies depending on the application of the coating object, and is not particularly limited. The dry film thickness is preferably from 0.5 to 2.0 μm, more preferably from 0.7 to 1.8 μm, and even more preferably from 0.8 to 1.5 μm. This is because of metallic luster of a coating film formed from the brilliant coating composition and reduced mottling of the coating film.

Examples of the coating object include outer panels of automobile bodies, such as those of passenger cars, trucks, motorcycles, and buses; automobile parts; and outer panels of home electrical appliances, such as mobile phones and audio devices. The coating object is preferably an outer panel of an automobile body or an automobile part.

The material of the coating object is not particularly limited. Examples of the material include metal materials, such as iron, aluminum, brass, copper, tinplate, stainless steel, galvanized steel, and zinc alloy (such as Zn-Al, Zn-Ni, or Zn-Fe)-plated steel; resins, such as polyethylene resins, polypropylene resins, acrylonitrile-butadiene-styrene (ABS) resins, polyamide resins, acrylic resins, vinylidene chloride resins, polycarbonate resins, polyurethane resins, and epoxy resins; plastic materials, such as various fiber-reinforced plastic (FRP); inorganic materials, such as glass, cement, and concrete; woods; and fiber materials, such as paper and cloth.

The surface of the coating object may be provided by a surface treatment, such as phosphate salt treatment, chromate treatment, or composite oxide treatment, of a metal surface of an outer panel of an automobile body, an automobile part, a home electrical appliance, or a metal substrate such as a steel plate constituting such a part.

A coating film may be further formed on an object that may or may not be subjected to surface treatment. For example, a coating object, i.e., a substrate may be subjected to surface treatment as necessary, and an undercoating film may be formed on the surface-treated object, or an intermediate coating film may be formed on the undercoating film. For example, when the coating object is an automobile body, the undercoating film and the intermediate coating film may be formed from known coating materials for undercoating and intermediate coating that are generally used for coating of automobile bodies.

The above-described proximal discharging is not particularly limited, so long as the distance between a discharge port and a coating object is a distance which is generally used for the liquid discharge head described above. The distance is preferably from 0.1 to 50.0 mm, more preferably from 0.5 to 30.0 mm, and even more preferably from 1.0 to 10.0 mm.

The frequency at which the brilliant coating composition is discharged from a valve in an apparatus including the liquid discharge head is preferably in a range of 10 to 10000 Hz, more preferably in a range of 30 to 5000 Hz, and even more preferably in a range of 50 to 3000 Hz, from the viewpoints of discharge stability, and reduced mottling of a coating film formed.

The pressure for supplying the brilliant coating composition to the liquid discharge head in an apparatus including the liquid discharge head is preferably in a range of 0.001 to 10 MPa, more preferably in a range of 0.005 to 5.0 MPa, and even more preferably in a range of 0.01 to 1.0 MPa, from the viewpoint of supply stability.

The scanning speed of the liquid discharge head in an apparatus including the liquid discharge head is preferably in a range of 10 to 1500 mm/s, more preferably in a range of 50 to 1000 mm/s, and even more preferably in a range of 100 to 800 mm/s, from the viewpoints of discharge stability and reduced mottling of a coating film formed.

The pitch during scanning of the liquid discharge head in an apparatus including the liquid discharge head is preferably in a range of 0.001 to 1.0 mm, more preferably in a range of 0.005 to 1.0 mm, and even more preferably in a range of 0.01 to 1.0 mm, from the viewpoint of coating efficiency.

Examples of the clear coating composition include curable clear coating compositions (such as a thermosetting clear coating composition and a photo-curable clear coating composition) and non-curable clear coating compositions. Examples of the thermosetting clear coating composition include organic solvent-type thermosetting coating compositions containing a base resin having a crosslinkable functional group and a curing agent; aqueous thermosetting coating compositions; and powdery thermosetting coating compositions.

Examples of the crosslinkable functional group contained in the base resin include a carboxyl group, a hydroxyl group, an epoxy group, and a silanol group. Examples of the type of base resin include acrylic resins, polyester resins, alkyd resins, urethane resins, epoxy resins, and fluororesins. Examples of the curing agent include polyisocyanate compounds, blocked polyisocyanate compounds, melamine resins, urea resins, carboxyl group-containing compounds, carboxyl group-containing resins, epoxy group-containing resins, and epoxy group-containing compounds.

The combination of the base resin/the curing agent in the clear coating composition is preferably a hydroxyl group-containing resin/a polyisocyanate compound, a carboxyl group-containing resin/an epoxy group-containing resin, a hydroxyl group-containing resin/a blocked polyisocyanate compound, or a hydroxyl group-containing resin/a melamine resin, and more preferably a hydroxyl group-containing resin/a polyisocyanate compound.

The clear coating composition may be a one-component coating material, or a multicomponent coating material such as a two-component urethane resin coating material.

The clear coating composition may contain, as necessary, a color pigment, an effect pigment, or a dye to such an extent that it does not impair transparency, and may further contain, as appropriate, an extender pigment, an ultraviolet absorber, a light stabilizer, an antifoaming agent, a thickener, a rust inhibitor, or a surface conditioner.

The method of applying the clear coating composition is not particularly limited, and a wet coating film may be formed by an application method such as air spraying, airless spraying, rotary atomization coating, or curtain coating. In such an application method, an electrostatic voltage may be applied as necessary. Among these methods, air spraying or rotary atomization coating is particularly preferred. The amount of application of the clear coating composition is determined so as to achieve a cured film thickness of generally 10 to 70 $\mu$m, preferably 20 to 50 $\mu$m.

Examples

The present disclosure will next be described in more detail with reference to Production Examples, Examples, and Comparative Examples. However, the present disclosure should not be construed as being limited to these Examples. In the Examples, "parts" and "%" are based on mass unless otherwise specified. The thickness of a coating film is based on that of a cured coating film.

Production of Acrylic Resin (C)

Production Example 1

A reaction vessel equipped with a thermometer, a thermostat, a stirrer, a reflux condenser, a nitrogen introduction tube, and a dripping device was charged with 130 parts of deionized water and 0.52 parts of "AQUALON KH-10" (trade name, available from DKS Co. Ltd., an emulsifier containing 97% active ingredient). Then, the materials were mixed under stirring in a nitrogen stream, and the mixture was heated to 80°C. Then, 1% of a total amount of a monomer emulsion (1) described below and 5.3 parts of 6% aqueous ammonium persulfate solution were introduced into the reaction vessel, and the reaction vessel was maintained at 80°C for 15 minutes. The remaining monomer emulsion (1) was added dropwise over 3 hours into the reaction vessel maintained at the temperature specified above. After completion of the dropwise addition, the mixture was aged for 1 hour. A monomer emulsion (2) described below was then added dropwise over 1 hour, and the mixture was aged for 1 hour. Then, while 40 parts of 5% aqueous dimethylethanolamine solution was gradually added to the reaction vessel, the mixture was cooled to 30°C. The mixture was discharged while being filtered with a 100-mesh nylon cloth, to obtain an acrylic resin (C-1) emulsion having a solid content concentration of 30%. The resulting acrylic resin (C-1) emulsion had an acid value of 33 mg KOH/g and a hydroxyl value of 25 mg KOH/g.

Monomer emulsion (1): the monomer emulsion (1) was produced by mixing and stirring 42 parts of deionized water, 0.72 parts of "AQUALON KH-10", 2.1 parts of methylenebisacrylamide, 2.8 parts of styrene, 16.1 parts of methyl methacrylate, 28 parts of ethyl acrylate, and 21 parts of n-butyl acrylate. Monomer emulsion (2): the monomer emulsion (2) was produced by mixing and stirring 18 parts of deionized water, 0.31 parts of "AQUALON KH-10", 0.03 parts of ammonium persulfate, 5.1 parts of methacrylic acid, 5.1 parts of 2-hydroxyethyl acrylate, 3 parts of styrene, 6 parts of methyl methacrylate, 1.8 parts of ethyl acrylate, and 9 parts of n-butyl acrylate.

Production Example 2

A reaction vessel equipped with a thermometer, a thermostat, a stirrer, a reflux condenser, a nitrogen introduction tube, and a dripping device was charged with 130 parts of deionized water and 0.52 parts of "AQUALON KH-10" (trade name, available from DKS Co. Ltd., an emulsifier containing 97% active ingredient). Then, the materials were mixed under stirring in a nitrogen stream, and the mixture was heated to 80°C. Then, 1% of a total amount of a monomer emulsion (3) described below and 5.3 parts of 6% aqueous ammonium persulfate solution were introduced into the reaction vessel, and the reaction vessel was maintained at 80°C for 15 minutes. The remaining monomer emulsion (3) was added dropwise over 3 hours into the reaction vessel maintained at the temperature specified above. After completion of the dropwise addition, the mixture was aged for 1 hour. A monomer emulsion (4) described below was then added dropwise over 1 hour, and the mixture was aged for 1 hour. Then, while 40 parts of 5% aqueous dimethylethanolamine solution was gradually added to the reaction vessel, the mixture was cooled to 30°C. The mixture was discharged while being filtered with a 100-mesh nylon cloth, to obtain an acrylic resin (C-2) emulsion having a solid content concentration of 30%. The resulting acrylic resin (C-2) emulsion had an acid value of 13 mg KOH/g and a hydroxyl value of 65 mg KOH/g.

Monomer emulsion (3): the monomer emulsion (3) was produced by mixing and stirring 46.2 parts of deionized water, 0.79 parts of "AQUALON KH-10", 7.7 parts of styrene, 16.94 parts of methyl methacrylate, 7.7 parts of n-butyl acrylate, 30.8 parts of n-butyl methacrylate, 11.55 parts of 2-hydroxyethyl methacrylate, and 2.31 parts of ethylene glycol dimethacrylate.

Monomer emulsion (4): the monomer emulsion (4) was produced by mixing and stirring 13.8 parts of deionized water, 0.24 parts of "AQUALON KH-10", 0.03 parts of ammonium persulfate, 2.3 parts of styrene, 6.9 parts of methyl methacrylate, 4.6 parts of ethyl acrylate, 3.68 parts of n-butyl acrylate, 3.45 parts of 2-hydroxyethyl methacrylate, and 2.07 parts of methacrylic acid.

Production of Phosphate Group-Containing Compound (D)

Production Example 3

A reaction vessel equipped with a thermometer, a thermostat, a stirrer, a reflux condenser, a nitrogen introduction tube, and a dripping device was charged with a mixed solvent of 27.5 parts of methoxypropanol and 27.5 parts of isobutanol and heated to 110°C. To the mixed solvent was added 121.5 parts of a mixture containing 25.0 parts of styrene, 27.5 parts of n-butyl methacrylate, 20.0 parts of "Isostearyl Acrylate" (trade name, available from Osaka Organic Chemical Ind. Ltd., branched higher alkyl acrylate), 7.5 parts of 4-hydroxybutyl acrylate, 15.0 parts of a phosphate group-containing polymerizable monomer described below, 12.5 parts of 2-methacryloyloxyethyl acid phosphate, 10.0 parts of isobutanol, and 4.0 parts of t-butyl peroxyoctanoate over 4 hours. A mixture of 0.5 parts of t-butyl peroxyoctanoate and 20.0 parts of isopropanol was then added dropwise over one hour. Subsequently, the resulting mixture was stirred and aged for one hour, to obtain a solution of an acrylic resin (D-1) having a hydroxyl group and a phosphoric acid group, the solution having a solid content of 50%. The resulting acrylic resin (D-1) having a hydroxyl group and a phosphate group had an acid value of 83 mg KOH/g, a hydroxyl value of 29 mg KOH/g, and a weight average molecular weight of 10000.

Phosphate group-containing polymerizable monomer: A reaction vessel equipped with a thermometer, a thermostat, a stirrer, a reflux condenser, a nitrogen introduction tube, and a dripping device was charged with 57.5 parts of monobutyl phosphate and 41.0 parts of isobutanol and heated to 90°C. Thereafter, 42.5 parts of glycidyl methacrylate was added dropwise over 2 hours, and the mixture was further stirred and aged for 1 hour. Subsequently, 59.0 parts of isopropanol was added, to obtain a phosphate group-containing polymerizable monomer solution having a solid content concentration of 50%. The acid value of the resulting monomer was 285 mg KOH/g.

Production of Polyester Resin (R)

Production Example 4

A reactor equipped with a thermometer, a stirrer, a heater, and a rectifying column was charged with 118 parts of 1,6-hexanediol and 102 parts of adipic acid, and a small amount of xylene for reflux was then added. The mixture was gradually heated to 250°C, the temperature was maintained for 5 hours, and esterification reaction was performed with dehydration, to obtain a polyester resin. To 100 parts of the polyester resin were added 102.5 parts of ethylene glycol monobutyl ether and 2.5 parts of orthophosphoric acid, and the mixture was maintained at 100°C for 3 hours, to obtain a polyester resin (R-1) solution having a solid content concentration of 50%. The number average molecular weight of the polyester resin (R-1) was 4000.

Production of Scale-Like Aluminum (Al) Pigment Dispersion (P)

Production Example 5

In a stirring and mixing vessel, 4.0 parts (solid content: 1.0 part) of "Jetfluid WB 21001" (trade name; available from Eckart; aluminum flake pigment; d50: 2.0 μm; d90: 5.0 μm; thickness: 25 nm; solid content concentration: 25%), 1.73 parts (solid content: 0.65 parts) of "Jetfluid WB 20001" (trade name; available from Eckart; phosphate ester compound; solid content concentration: 37.5%), and 0.4 parts of ethylene glycol monobutyl ether were homogeneously mixed, to obtain a scale-like aluminum pigment dispersion (P-1).

Production Examples 6 to 15

Scale-like aluminum pigment dispersions (P-2) to (P-11) were produced in the same manner as in Production Example 5, except that the formulation composition of Production Example 5 was changed as listed in Table 1 below.
[Table 1]

Table 1

| | | Production Examples | 5 | 6 | 7 | 8 | 9 | 10 | 11 | 12 | 13 | 14 | 15 |
|---|---|---|---|---|---|---|---|---|---|---|---|---|---|
| Scale-like Al pigment dispersion | Scale-like Al pigment (A) | Jetfluid WB 21001 | 4.0 (1.0) | | | | 4.0 (1.0) | | 27.5 (6.9) | 2.4 (0.6) | | | |
| | | Jetfluid SB 11028 (Note 1) | | 33.4 (1.0) | | | | | | | | | |
| | | Jetfluid SB 11031 (Note 2) | | | 20.1 (1.0) | | | | | | | | |
| | | Al paste 6390NS (Note 3) | | | | 1.5 (1.0) | | 4.4 (2.9) | | | | | |
| | Phosphate group-containing compound (D) | Jetfluid WB 20001 | 1.73 (0.65) | 1.73 (0.65) | 1.73 (0.65) | 1.73 (0.65) | | 5.1 (1.9) | 12.00 (4.50) | 1.00 (0.38) | 1.73 (0.65) | 1.73 (0.65) | 1.73 (0.65) |
| | | Acrylic resin (D-1) solution | | | | | 1.3 (0.7) | | | | | | |
| | Additional scale-like Al pigment | WS3004 (D50 11) (Note 4) | | | | | | | | | 10.0 (1.0) | | |
| | | Al paste AM-1501 (Note 5) | | | | | | | | | | 1.6 (1.0) | |
| | | Al paste 6360NS (Note 6) | | | | | | | | | | | 1.4 (1.0) |
| | Ethylene glycol monobutyl ether | | 0.4 | 0.4 | 0.4 | 0.4 | 0.4 | 1.2 | 0.4 | 0.4 | 0.4 | 0.4 | 0.4 |
| | Scale-like Al pigment dispersion | | P-1 | P-2 | P-3 | P-4 | P-5 | P-6 | P-7 | P-8 | P-9 | P-10 | P-11 |

A numerical value in parentheses means a solid content and, in principle, is rounded off to one decimal place.

(Note 1) "Jetfluid SB 11028": trade name; available from Eckart; aluminum flake pigment; d50: 2.0 μm; d90: 4.0 μm; thickness: 25 nm; aluminum flake concentration: 3%

(Note 2) "Jetfluid SB 11031": trade name; available from Eckart; aluminum flake pigment; d50: 1.5 μm; d90: 2.0 μm; thickness: 25 nm; aluminum flake concentration: 5%

(Note 3) "Aluminum (Al) paste 6390NS": trade name; available from Toyo Aluminium K.K.; aluminum flake pigment; d50: 6.5 μm; d90: 11.0 μm; thickness: 140 nm; solid content concentration: 67%

(Note 4) "Hydroshine WS-3004": trade name; available from Eckart; vapor-deposition-type aluminum flake pigment for aqueous paints; d50: 13.0 $\mu$m; d90: 20.0 $\mu$m; thickness: 50 nm; solid content concentration: 10%

(Note 5) "Aluminum (Al) paste AM-1501": trade name; available from Asahi Kasei Corporation; aluminum flake pigment; d50: 8.0 $\mu$m; d90: 18.0 $\mu$m; thickness: 70 nm; solid content concentration: 61%

(Note 6) "Aluminum (Al) paste 6360NS": trade name; available from Toyo Aluminium K.K.; aluminum flake pigment; d50: 11.0 $\mu$m; d90: 19.0 $\mu$m; thickness: 190 nm; solid content concentration: 70%

Production of Cellulose Nanocrystal (B2) Aqueous Dispersion

Production Example 16

"Celluforce NCC" (trade name, available from Celluforce Inc.; sodium cellulose sulfonate nanocrystal; solid content concentration: 100%) was gradually added to a deionized water stirred by a magnetic stirrer, so that the solid content concentration reached 4%, and the stirring was then continued for 2 hours, to obtain a cellulose nanocrystal (B2-1) aqueous dispersion.

Preparation of Brilliant Coating Composition

Example 1

A stirring vessel was charged with 6.2 parts (solid content: 1.65 parts) of the scale-like aluminum pigment dispersion (P-1) obtained in Production Example 5, 63.5 parts of distilled water, 27.5 parts (solid content: 0.55 parts) of "RHEOCRYSTA I-2SX" (trade name; available from DKS Co., Ltd.; cellulose nanofiber; viscosity modifier; solid content concentration: 2.0%), 2.2 parts (solid content: 0.65 parts) of the acrylic resin emulsion (C-1) obtained in Production Example 1, 0.25 parts (solid content: 0.25 parts) of "BYK 348" (trade name; available from BYK; silicone-based surface conditioner; solid content concentration: 100%), 0.25 parts (solid content: 0.12 parts) of "TINUVIN 479-DW" (trade name; available from BASF; hydroxyphenyltriazine-based ultraviolet absorber; containing a HPT-based ultraviolet absorber TINUVIN 479 in an acrylic polymer; solid content concentration: 40%), 0.20 parts (0.080 parts) of "TINUVIN 123-DW" (trade name; available from BASF; light stabilizer; bis(2,2,6,6-tetramethyl-1-(octyloxy)-4-piperidinyl) decanedioate ester; containing HALS TINUVIN 123 having an aminoether group in an acrylic polymer; solid content concentration: 50%), and 0.01 parts of dimethylethanolamine, and these materials were stirred, to prepare a brilliant coating composition No. 1 having a solid content concentration of 3.3%.

Examples 2 to 16 and Comparative Examples 1 to 6

Brilliant coating compositions No. 2 to No. 22 were prepared in the same manner as in Example 1, except that the formulation composition of Example 1 was changed as listed in Table 2 below.

Straight Discharge Test and Nozzle Clogging Test

The brilliant coating compositions No. 1 to No. 22 prepared in Examples 1 to 16 and Comparative Examples 1 to 6 were subjected to the following straight discharge test and nozzle clogging test.

Straight Discharge Test

Each of the brilliant coating compositions No. 1 to No. 22 was charged in "X JET" (trade name; available from SSI JAPAN; piezo jet dispenser for high viscosity and small amount application; discharge port size: 100 $\mu$m). Then, each of the brilliant coating compositions No. 1 to No. 22 was applied to a coating object under conditions of a frequency of 350 Hz, a supply pressure of 0.03 MPa, a rate of 230 mm/s, and a distance between the discharge port and the coating object of 10 mm, to form a linear product (length: 10 cm). The distortion of the linear product was observed for evaluation. ◎ and ○ are acceptable. The evaluation results are listed in Table 2.

◎: No distortion was observed in the linear product.
○: The linear product was partially distorted, which caused no problems in practical use.
△: The linear material was entirely distorted, which caused problems in practical use.
×: The linear product failed to be formed.

Nozzle Clogging Test

Each of the brilliant coating compositions No. 1 to No. 22 was charged in "X JET" (trade name; available from SSI JAPAN; piezo jet dispenser for high viscosity and small amount application; discharge port size: 100 μm). Then, 100 droplets were discharged under conditions of a frequency of 350 Hz, a supply pressure of 0.03 MPa, 23°C, and a relative humidity of 68%, and the sizes of droplets were observed by using "FASTCAM Mini UX100" (trade name; available from Photron Limited; high-speed camera), to evaluate a variation in discharge amount caused by nozzle clogging. ◎ and ○ are acceptable. The evaluation results are listed in Table 2.

◎: There was no variation in discharge amount of the brilliant coating composition.
○: There was a slight variation in discharge amount of the brilliant coating composition, which caused no problems in practical use.
△: There were a large variation in discharge amount of the brilliant coating composition, which caused problems in practical use.
×: The brilliant coating composition failed to be discharged.

[Table 2-1]

Table 2

| | | | | | Examples | | | | | | |
|---|---|---|---|---|---|---|---|---|---|---|---|
| | | | | 1 | 2 | 3 | 4 | 5 | 6 | 7 | 8 |
| Brilliant coating composition No. | | | | 1 | 2 | 3 | 4 | 5 | 6 | 7 | 8 |
| Brilliant coating composition | Scale-like Al pigment dispersion | Scale-like Al pigment (A) | Jetfluid WB 21001 | 4.0 (1.0) | | | | 4.0 (1.0) | 4.0 (1.0) | 4.0 (1.0) | 4.0 (1.0) |
| | | | Jetfluid SB 11028 (Note 1) | | 33.4 (1.0) | | | | | | |
| | | | Jetfluid SB 11031 (Note 2) | | | 20.1 (1.0) | | | | | |
| | | | Al paste 6390NS (Note 3) | | | | 1.5 (1.0) | | | | |
| | | Phosphate group-containing compound (D) | Jetfluid WB 20001 | 1.73 (0.65) | 1.73 (0.65) | 1.73 (0.65) | 1.73 (0.65) | 1.73 (0.65) | 1.73 (0.65) | 1.73 (0.65) | 1.73 (0.65) |
| | | | Acrylic resin (D-1) | | | | | | | | |
| | | Additional scale-like Al pigment | WS3004 (D50 11) (Note 4) | | | | | | | | |
| | | | Al paste AM-1501 (Note 5) | | | | | | | | |
| | | | Al paste 6360NS (Note 6) | | | | | | | | |
| | | Ethylene glycol monobutyl ether | | 0.4 | 0.4 | 0.4 | 0.4 | 0.4 | 0.4 | 0.4 | 0.4 |
| | | Scale-like Al pigment dispersion name | | P-1 | P-2 | P-3 | P-4 | P-1 | P-1 | P-1 | P-1 |
| | Distilled water | | | 63.5 | 34.0 | 47.2 | 66.0 | 77.2 | 64.2 | 47.9 | 58.1 |
| | Nanocellulose (B) | Cellulose nanofiber (B1) RHEOCRYSTA I-2SX | | 27.5 (0.6) | 27.5 (0.6) | 27.5 (0.6) | 27.5 (0.6) | | 27.5 (0.6) | 44.9 (0.9) | 32.6 (0.7) |
| | | Cellulose nanocrystal (B2) Cellulose nanocrystal (B2-1) | | | | | | 13.8 (0.6) | | | |
| | Acrylic resin (C) | Acrylic resin (C-1) emulsion | | 2.2 (0.7) | 2.2 (0.7) | 2.2 (0.7) | 2.2 (0.7) | 2.2 (0.7) | | | 2.7 (0.8) |
| | Additional viscosity modifier | ASE-60 (Note 7) | | | | | | | | | |
| | | UH-752 (Note 8) | | | | | | | | | |
| | Surface conditioner | BYK348 | | 0.25 (0.25) | 0.25 (0.25) | 0.25 (0.25) | 0.25 (0.25) | 0.25 (0.25) | 0.25 (0.25) | 0.55 (0.55) | |
| | Additional resin | Polyester resin (R-1) | | | | | | | 1.3 (0.7) | | |

| | | | | | | | | | |
|---|---|---|---|---|---|---|---|---|---|
| Ultraviolet absorber | TINUVIN 479-DW (N) | 0.25 (0.10) | 0.25 (0.10) | 0.25 (0.10) | 0.25 (0.10) | 0.25 (0.10) | 0.25 (0.10) | 0.25 (0.10) | 0.25 (0.10) |
| Light stabilizer | TINUVIN 123-DW (N) | 0.20 (0.10) | 0.20 (0.10) | 0.20 (0.10) | 0.20 (0.10) | 0.20 (0.10) | 0.20 (0.10) | 0.20 (0.10) | 0.20 (0.10) |
| Dimethylethanolamine | | 0.01 | 0.01 | 0.01 | 0.01 | 0.01 | 0.01 | 0.01 | 0.01 |
| Solid content concentration (%) | | 3.3 | 3.3 | 3.3 | 3.3 | 3.3 | 3.3 | 3.3 | 3.3 |
| d50 of scale-like Al pigment (A) (μm) | | 2.5 | 2.0 | 1.5 | 6.5 | 2.5 | 2.5 | 2.5 | 2.5 |
| d90 of scale-like Al pigment (A) (μm) | | 5.0 | 4.0 | 2.0 | 11.0 | 5.0 | 5.0 | 5.0 | 5.0 |
| Average thickness of scale-like Al pigment (A) (nm) | | 25 | 25 | 25 | 140 | 25 | 25 | 25 | 25 |
| Evaluation | Straight discharge (SSI) | ◎ | ◎ | ◎ | ○ | ◎ | ◎ | ◎ | ○ |
| | Nozzle clogging (SSI) | ◎ | ◎ | ◎ | ○ | ◎ | ◎ | ◎ | ◎ |

A numerical value in parentheses means a solid content and, in principle, is rounded off to one decimal place.

[Table 2-2]

Table 2 (continued)

| | | | | Examples | | | | | | | |
|---|---|---|---|---|---|---|---|---|---|---|---|
| | | | | 9 | 10 | 11 | 12 | 13 | 14 | 15 | 16 |
| Brilliant coating composition No. | | | | 9 | 10 | 11 | 12 | 13 | 14 | 15 | 16 |
| Brilliant coating composition | Scale-like Al pigment dispersion | Scale-like Al pigment (A) | Jetfluid WB 21001 | 4.0 (1.0) | 1.0 (0.3) | | 27.5 (6.9) | 2.4 (0.6) | 4.0 (1.0) | 4.0 (1.0) | 4.0 (1.0) |
| | | | Jetfluid SB 11028 (Note 1) | | | | | | | | |
| | | | Jetfluid SB 11031 (Note 2) | | | | | | | | |
| | | | Al paste 6390NS (Note 3) | | | 4.4 (2.9) | | | | | |
| | | Phosphate group-containing compound (D) | Jetfluid WB 20001 | | 0.45 (0.17) | 5.10 (1.91) | 12.00 (4.50) | 1.0 (0.38) | 1.73 (0.65) | 1.73 (0.65) | 1.73 (0.65) |
| | | | Acrylic resin (D-1) | 1.3 (0.7) | | | | | | | |
| | | Additional scale-like Al pigment | WS3004 (D50 11) (Note 4) | | | | | | | | |
| | | | Al paste AM-1501 (Note 5) | | | | | | | | |
| | | | Al paste 6360NS (Note 6) | | | | | | | | |

| | | | | | | | | | |
|---|---|---|---|---|---|---|---|---|---|
| Ethylene glycol monobutyl ether | | 0.4 | 0.1 | 1.2 | 0.4 | 0.4 | 0.4 | 0.4 | 0.4 |
| Scale-like Al pigment dispersion name | | P-5 | P-1 | P-6 | P-7 | P-8 | P-1 | P-1 | P-1 |
| Distilled water | | 64.0 | 90.5 | 0.0 | 29.5 | 65.8 | 33.2 | 69.2 | 63.0 |
| Nanocellulose (B) | Cellulose nanofiber (B1) RHEOCRYSTA I-2SX | 27.5 (0.6) | 7.1 (0.1) | 80.8 (1.6) | 27.5 (0.6) | 27.5 (0.6) | 60.0 (1.2) | 21.4 (0.4) | 27.5 (0.6) |
| | Cellulose nanocrystals (B2) Cellulose nanocrystals (B2-1) | | | | | | | | |
| Acrylic resin (C) | Acrylic resin (C-1) emulsion | 2.2 (0.7) | 0.56 (0.2) | 6.4 (1.9) | 2.2 (0.7) | 2.2 (0.7) | 0 (0) | 2.6 (0.8) | 2.8 (0.8) |
| Additional viscosity modifier | ASE-60 (Note 7) | | | | | | | | |
| | UH-752 (Note 8) | | | | | | | | |
| Surface conditioner | BYK348 | 0.25 (0.25) | 0.065 (0.065) | 0.73 (0.73) | 0.25 (0.25) | 0.25 (0.25) | 0.25 (0.25) | 0.25 (0.25) | 0.25 (0.25) |
| Additional resin | Polyester resin (R-1) | | | | | | | | |
| Ultraviolet absorber | TINUVIN 479-DW (N) | 0.25 (0.10) | 0.06 (0.024) | 0.74 (0.30) | 0.25 (0.10) | 0.25 (0.10) | 0.25 (0.10) | 0.25 (0.10) | |
| Light stabilizer | TINUVIN 123-DW (N) | 0.20 (0.10) | 0.05 (0.03) | 0.59 (0.30) | 0.20 (0.10) | 0.20 (0.10) | 0.20 (0.10) | 0.20 (0.10) | |
| Dimethylethanolamine | | 0.01 | 0.003 | 0.03 | 0.01 | 0.01 | 0.01 | 0.01 | 0.01 |
| Solid content concentration (%) | | 3.3 | 0.85 | 9.7 | 13.0 | 2.6 | 3.3 | 3.3 | 3.3 |
| d50 of scale-like Al pigment (A) (μm) | | 2.5 | 2.5 | 6.5 | 2.5 | 2.5 | 2.5 | 2.5 | 2.5 |
| d90 of scale-like Al pigment (A) (μm) | | 5.0 | 5.0 | 11.0 | 5.0 | 5.0 | 5.0 | 5.0 | 5.0 |
| Average thickness of scale-like Al pigment (A) (nm) | | 25 | 25 | 140 | 25 | 25 | 25 | 25 | 25 |
| Evaluation | Straight discharge (SSI) | ◎ | ◎ | ○ | ○ | ◎ | ◎ | ◎ | ◎ |
| | Nozzle clogging (SSI) | ◎ | ◎ | ○ | ○ | ◎ | ○ | ◎ | ◎ |

A numerical value in parentheses means a solid content and, in principle, is rounded off to one decimal place.

[Table 2-3]

Table 2 (continued)

| | | | | Comparative Examples | | | | | |
|---|---|---|---|---|---|---|---|---|---|
| | | | | 1 | 2 | 3 | 4 | 5 | 6 |
| Brilliant coating composition No. | | | | 17 | 18 | 19 | 20 | 21 | 22 |
| Brilliant coating composition | Scale-like Al pigment dispersion | Scale-like Al pigment (A) | Jetfluid WB 21001 | | | | 4.0 (1.0) | 4.0 (1.0) | 4.8 (1.2) |
| | | | Jetfluid SB 11028 (Note 1) | | | | | | |
| | | | Jetfluid SB 11031 (Note 2) | | | | | | |
| | | | Al paste 6390NS (Note 3) | | | | | | |
| | | Phosphate group-containing compound (D) | Jetfluid WB 20001 | 1.73 (0.65) | 1.73 (0.65) | 1.73 (0.65) | 1.73 (0.65) | 1.73 (0.65) | 2.10 (0.77) |
| | | | Acrylic resin (D-1) | | | | | | |
| | | Additional scale-like Al pigment | WS3004 (D50 11) (Note 4) | 10.0 (1.0) | | | | | |
| | | | Al paste AM-1501 (Note 5) | | 1.6 (1.0) | | | | |
| | | | Al paste 6360NS (Note 6) | | | 1.4 (1.0) | | | |
| | | Ethylene glycol monobutyl ether | | 0.4 | 0.4 | 0.4 | 0.4 | 0.4 | 0.5 |
| | | Scale-like Al pigment dispersion name | | P-9 | P-10 | P-11 | P-1 | P-1 | P-1 |
| | Distilled water | | | 57.3 | 65.0 | 66.0 | 89.0 | 89.0 | 89.1 |
| | Nanocellulose (B) | Cellulose nanofiber (B1) RHEOCRYSTA I-2SX | | 27.5 (0.6) | | 27.5 (0.6) | | | |
| | | Cellulose nanocrystal (B2) Cellulose nanocrystal (B2-1) | | | | | | | |
| | Acrylic resin (C) | Acrylic resin (C-1) emulsion | | 2.2 (0.7) | 2.2 (0.7) | 2.2 (0.7) | 2.2 (0.7) | 2.2 (0.7) | 2.6 (0.8) |
| | Additional viscosity modifier | ASE-60 (Note 7) | | | | | 2.0 (0.56) | | |
| | | UH-752 (Note 8) | | | | | | 2.0 (0.56) | |
| | Surface conditioner | BYK348 | | 0.25 (0.25) | 0.25 (0.25) | 0.25 (0.25) | 0.25 (0.25) | 0.25 (0.25) | 0.3 (0.3) |
| | Additional resin | Polyester resin (R-1) | | | | | | | |

| | | | | | | | |
|---|---|---|---|---|---|---|---|
| Ultraviolet absorber | TINUVIN 479-DW (N) | 0.25 (0.10) | 0.25 (0.10) | 0.25 (0.10) | 0.25 (0.10) | 0.25 (0.10) | 0.30 (0.12) |
| Light stabilizer | TINUVIN 123-DW (N) | 0.20 (0.10) | 0.20 (0.10) | 0.20 (0.10) | 0.20 (0.10) | 0.20 (0.10) | 0.24 (0.12) |
| Dimethylethanolamine | | 0.01 | 0.01 | 0.01 | 0.01 | 0.01 | 1.20 |
| Solid content concentration (%) | | 3.3 | | 3.3 | 3.3 | 3.3 | 3.3 |
| d50 of scale-like Al pigment (A) ($\mu$m) | | 11.0 | 8.0 | 11.0 | 2.5 | 2.5 | 2.5 |
| d90 of scale-like Al pigment (A) ($\mu$m) | | 20.0 | 18.0 | 19.0 | 5.0 | 5.0 | 5.0 |
| Average thickness of scale-like Al pigment (A) (nm) | | 50 | 70 | 190 | 25 | 25 | 25 |
| Evaluation | Straight discharge (SSI) | × | × | × | ○ | △ | △ |
| | Nozzle clogging (SSI) | × | × | × | ○ | △ | ◎ |

A numerical value in parentheses means a solid content and, in principle, is rounded off to one decimal place.

(Note 7) "Primal ASE-60": trade name, available from The Dow Chemical Company, polyacrylic acid-based viscosity modifier, solid content concentration of 28%

(Note 8) "UH-752": trade name, available from ADEKA Corporation, urethane-associative viscosity modifier, solid content concentration of 28%

Preparation of Clear Coating Composition (Z-1)

Production Example 17

In a stirring and mixing vessel, 233.3 parts (solid content: 70 parts) of the acrylic resin emulsion (C-2) obtained in Production Example 2 and 78.9 parts (solid content: 30 parts) of "Bayhydur VP LS 2310" (trade name; available from Sumika Bayer Urethane Co., Ltd.; blocked polyisocyanate compound; solid content concentration: 38%) were homogeneously mixed, and deionized water was added under stirring so as to achieve a solid content concentration of 40%, to obtain a one-component aqueous clear coating composition (Z-1).

Preparation of Coating Object for Flip Flop Property Test and Mottling Test

Preparation of Coating Object (O-1) for Flip Flop Property Test and Mottling Test

The surface of a black polypropylene sheet having a length of 100 mm, a width of 100 mm, and a thickness of 2 mm was subjected to degreasing treatment by wiping with gauze containing petroleum benzine, and then "ASCALEX #2850" (trade name; available from Kansai Paint Co., Ltd.; polyolefin-containing aqueous primer coating material) was applied to the sheet by using a hand spray gun so that the thickness of a cured coating film was 15 $\mu$m. The sheet was allowed to stand for 5 minutes, and then preheated at 80°C for 3 minutes. Then, the sheet was allowed to stand for 7 minutes, and then heated at 80°C for 30 minutes to cure the primer coating film, to prepare a coating object (O-1).

Preparation of Coating Object (O-2) for Flip Flop Property Test and Mottling Test

"Elecron 9400HB" (trade name; available from Kansai Paint Co., Ltd.; using a blocked polyisocyanate compound as a curing agent in an amine-modified epoxy resin-based cationic resin) was applied by electrodeposition onto an alloyed molten zinc-plated steel sheet treated with zinc phosphate so as to achieve a film thickness of 20 $\mu$m, and the steel sheet was heated at 170°C for 30 minutes for curing, to form an electrodeposition coating film. Subsequently, "WP-522H" (available from Kansai Paint Co., Ltd.; trade name; polyester resin-based aqueous intermediate coating material) was applied by using a hand spray gun onto the electrodeposition coating film so that the thickness of a cured coating film was 15 $\mu$m, and then allowed to stand for 5 minutes, followed by preheating at 80°C for 3 minutes. Then, the coated sheet was allowed to stand for 7 minutes, and then heated at 80°C for 30 minutes to cure the intermediate coating film, to prepare a coating object (O-2).

Preparation of Coating Object (O-3) for Flip Flop Property Test and Mottling Test

"RETAN WB ECO EV BASE" (available from Kansai Paint Co., Ltd.; trade name; aqueous colored base coating material) was applied to the coating object (O-1) so as to achieve a dry film thickness of 15 $\mu$m, and allowed to stand at room temperature for 5 minutes and preheated at 80°C for 3 minutes, to form an uncured basecoat film. Then, the clear coating composition (Z-1) obtained in Production Example 17 was applied by using a hand spray gun onto the uncured basecoat film so as to achieve a cured film thickness of 35 $\mu$m, allowed to stand for 7 minutes, and then heated at 80°C for 30 minutes to cure the basecoat film and the clear coating film, to prepare a coating object (O-3).

Preparation of Coating Object (O-4) for Flip Flop Property Test and Mottling Test

A coating object (O-4) was prepared in the same manner as in "Preparation of Coating Object (O-3) for Flip Flop Property Test and Mottling Test" (RETAN WB ECO EV CLEAR was applied by using a hand spray gun so as to achieve a cured film thickness of 35 $\mu$m, allowed to stand for 7 minutes, and then heated at 80°C for 30 minutes to cure the basecoat film and the clear coating film), except for the clear coating composition (Z-1) was changed to "RETAN WB ECO EV CLEAR" (available from Kansai Paint Co., Ltd.; trade name; two-component aqueous clear coating material).

Preparation of Coating Object (O-5) for Flip Flop Property Test and Mottling Test

"Elecron 9400HB" (trade name; available from Kansai Paint Co., Ltd.; using a blocked polyisocyanate compound as a curing agent in an amine-modified epoxy resin-based cationic resin) was applied by electrodeposition onto an alloyed molten zinc-plated steel sheet treated with zinc phosphate so as to achieve a film thickness of 20 $\mu$m, and the steel sheet was heated at 170°C for 30 minutes for curing, to form an electrodeposition coating film. Subsequently, "WP-522H" (available from Kansai Paint Co., Ltd.; trade name; polyester resin-based aqueous intermediate coating material) was applied by using a hand spray gun onto the electrodeposition coating film so that the thickness of a cured coating film was 15 $\mu$m, allowed to stand for 5 minutes, then preheated at 80°C for 3 minutes, allowed to stand for 7 minutes, and then heated at 80°C for 30 minutes, to cure the intermediate coating film. "RETAN WB ECO EV BASE" (available from Kansai Paint Co., Ltd.; trade name; aqueous colored base coating material) was applied to the intermediate coating film so as to achieve a dry film thickness of 15 $\mu$m, allowed to stand at room temperature for 5 minutes, and preheated at 80°C for 3 minutes, to form an uncured basecoat film. Then, "RETAN WB ECO EV CLEAR" (available from Kansai Paint Co., Ltd.; trade name; two-component aqueous clear coating material) was applied by using a hand spray gun onto the uncured basecoat film so as to achieve a cured film thickness of 35 $\mu$m, allowed to stand for 7 minutes, and then heated at 80°C for 30 minutes to cure the basecoat film and the clear coating film, to prepare a coating object (O-5).

Preparation of Coated Sheet for Flip Flop Property Test and Mottling Test

Example 17

Preparation of Coated Sheet (S1) for Flip Flop Property Test and Mottling Test

The brilliant coating composition No. 1 was charged in "X JET" (trade name; available from SSI JAPAN; piezo jet dispenser for high viscosity and small amount application; discharge port size: 100 $\mu$m). The brilliant coating composition No. 1 was applied to the coating object (O-1) under conditions of a frequency of 350 Hz, a supply pressure of 0.03 MPa, a pitch of 1 mm, a distance between the discharge port and the coating object of 10 mm, 23°C, and a relative humidity of 68% so as to achieve a dry film thickness of 1 $\mu$m, then allowed to stand for 5 minutes at room temperature, and then preheated at 80°C for 3 minutes, to form an uncured brilliant coating film. Then, the clear coating composition (Z-1) produced in Production Example 17 was applied by using a hand spray gun onto the uncured brilliant coating film so as to achieve a cured film thickness of 35 $\mu$m, then allowed to stand for 7 minutes, and then heated at 80°C for 30 minutes to cure the coating film, to prepare a coated sheet (S1-1).

Preparation of Coated Sheet (S2) for Flip Flop Property Test and Mottling Test

A coated sheet (S2-1) was prepared in accordance with "Preparation of Coated Sheet (S1) for Flip Flop Property Test and Mottling Test" except that the "coating object (O-1)" was changed to the "coating object (O-2)".

Preparation of Coated Sheet (S3) for Flip Flop Property Test and Mottling Test

A coated sheet (S3-1) was prepared in accordance with "Preparation of Coated Sheet (S1) for Flip Flop Property Test and Mottling Test" except that the "coating object (O-1)" was changed to the "coating object (O-3)".

Preparation of Coated Sheet (S4) for Flip Flop Property Test and Mottling Test

The brilliant coating composition No. 1 was charged in "X JET" (trade name; available from SSI JAPAN; piezo jet dispenser for high viscosity and small amount application; discharge port size: 100 μm). The brilliant coating composition No. 1 was applied to the coating object (O-4) under conditions of a frequency of 350 Hz, a supply pressure of 0.03 MPa, a pitch of 1 mm, a distance between the discharge port and the coating object of 10 mm, 23°C, and a relative humidity of 68% to achieve a dry film thickness of 1 μm, then allowed to stand for 5 minutes at room temperature, and then preheated at 80°C for 3 minutes, to form an uncured brilliant coating film. Then, "RETAN WB ECO EV CLEAR" (available from Kansai Paint Co., Ltd.; trade name; two-component aqueous clear coating material) was applied by using a hand spray gun onto the uncured brilliant coating film so as to achieve a cured film thickness of 35 μm, then allowed to stand for 7 minutes, and then heated at 80°C for 30 minutes to cure the coating film, to prepare a coated sheet (S4-1).

Preparation of Coated Sheet (S5) for Flip Flop Property Test and Mottling Test

A coated sheet (S5-1) was prepared in accordance with "Preparation of Coated Sheet (S4) for Flip Flop Property Test and Mottling Test" except that the "coating object (O-4)" was changed to the "coating object (O-5)".

Preparation of Coated Sheet (S6) for Flip Flop Property Test and Mottling Test

The brilliant coating composition No. 1 was applied by using Robobell available from ABB to the coating object (O-5) under conditions of 23°C and a relative humidity of 68% so as to achieve a dry film thickness of 1 μm, then allowed to stand at room temperature for 5 minutes, and then preheated at 80°C for 3 minutes, to form an uncured brilliant coating film. Then, "RETAN WB ECO EV CLEAR" (available from Kansai Paint Co., Ltd.; trade name; two-component aqueous clear coating material) was applied by using a hand spray gun onto the uncured brilliant coating film so as to achieve a cured film thickness of 35 μm, then allowed to stand for 7 minutes, and then heated at 80°C for 30 minutes to cure the coating film, to prepare a coated sheet (S6-1) for flip flop property test and mottling test.

Examples 18 to 36 and Comparative Examples 7 to 12

Coated sheets (S1-21) to (S1-26), (S2-2) to (S2-26), (S3-2) to (S3-26), (S4-2) to (S4-26), (S5-2) to (S5-26), and (S6-2) to (S6-26) for flip flop property test and mottling test were prepared in the same manner as in Example 17 except that the combination of the brilliant coating composition and the film thickness of Example 17 was changed as listed in Table 3. The coated sheets (S1-21) to (S1-23), (S2-21) to (S2-23), (S3-21) to (S3-23), (S4-21) to (S4-23), and (S5-21) to (S5-23) were not evaluated, since the coating failed to be performed due to nozzle clogging.

Flip Flop Property (FF Property) Test

For each of the coated sheets for flip flop property test and mottling test prepared in Examples 17 to 36 and Comparative Examples 7 to 12, an L* value at an acceptance angle of 15 degrees (L*15 value) and an L* value at an acceptance angle of 110 degrees (L*110 value) were measured by using a multi-angle spectrophotometer (trade name "MA-68II", available from X-Rite, Inc.), and the FF value of the coating film on each of the coated sheets for test was calculated based on the following equation and evaluated based on the following criteria. A larger FF value indicates superior flip flop property. ◎ and ○ are acceptable. The evaluation results are listed in Table 3.

$$FF \text{ value} = L^*15 \text{ value}/L^*110 \text{ value}$$

◎: FF value of 5.0 or greater.
○: FF value of 3.5 or greater and less than 5.0.
△: FF value of 2.0 or greater and less than 3.5.
×: FF value of less than 2.0.

Mottling Test

For each of the coated sheets for flip flop property test and mottling test prepared in Examples 17 to 36 and Comparative Examples 7 to 12, metallic mottling was visually evaluated. ◎ and ○ are acceptable. The evaluation results are listed in Table 3.

◎: No metallic mottling was observed.
○: Slight metallic mottling was observed, but it was acceptable.
△: Metallic mottling was observed.
×: Noticeable metallic mottling was observed.

[Table 3-1]

Table 3

| | | | Examples | | | | | | | | | | | | |
|---|---|---|---|---|---|---|---|---|---|---|---|---|---|---|---|
| | | | 17 | 18 | 19 | 20 | 21 | 22 | 23 | 24 | 25 | 26 | 27 | 28 | 29 |
| Brilliant coating composition No. | | | 1 | 2 | 3 | 4 | 5 | 6 | 7 | 8 | 9 | 10 | 11 | 12 | 13 |
| Dry film thickness (μm) | | | 1.0 | 1.0 | 1.0 | 1.0 | 1.0 | 1.0 | 1.0 | 1.0 | 1.0 | 1.0 | 1.0 | 1.0 | 1.0 |
| Evaluation | Coated sheet (S1) | Coated sheet No. | S1-1 | S1-2 | S1-3 | S1-4 | S1-5 | S1-6 | S1-7 | S1-8 | S1-9 | S1-10 | S1-11 | S1-12 | S1-13 |
| | | FF property | ◎ | ◎ | ◎ | ○ | ○ | ◎ | ○ | ○ | ◎ | ○ | ○ | ◎ | ○ |
| | | Mottling | ◎ | ◎ | ◎ | ○ | ◎ | ◎ | ◎ | ◎ | ◎ | ○ | ○ | ○ | ○ |
| | Coated sheet (S2) | Coated sheet No. | S2-1 | S2-2 | S2-3 | S2-4 | S2-5 | S2-6 | S2-7 | S2-8 | S2-9 | S2-10 | S2-11 | S2-12 | S2-13 |
| | | FF property | ◎ | ◎ | ◎ | ○ | ○ | ◎ | ○ | ○ | ◎ | ○ | ○ | ◎ | ○ |
| | | Mottling | ◎ | ◎ | ◎ | ○ | ◎ | ◎ | ◎ | ◎ | ◎ | ○ | ○ | ○ | ○ |
| | Coated sheet (S3) | Coated sheet No. | S3-1 | S3-2 | S3-3 | S3-4 | S3-5 | S3-6 | S3-7 | S3-8 | S3-9 | S3-10 | S3-11 | S3-12 | S3-13 |
| | | FF property | ◎ | ◎ | ◎ | ○ | ○ | ◎ | ○ | ○ | ◎ | ○ | ○ | ◎ | ○ |
| | | Mottling | ◎ | ◎ | ◎ | ○ | ◎ | ◎ | ◎ | ◎ | ◎ | ○ | ○ | ○ | ○ |
| | Coated sheet (S4) | Coated sheet No. | S4-1 | S4-2 | S4-3 | S4-4 | S4-5 | S4-6 | S4-7 | S4-8 | S4-9 | S4-10 | S4-11 | S4-12 | S4-13 |
| | | FF property | ◎ | ◎ | ◎ | ○ | ○ | ◎ | ○ | ○ | ◎ | ○ | ○ | ◎ | ○ |
| | | Mottling | ◎ | ◎ | ◎ | ○ | ◎ | ◎ | ◎ | ◎ | ◎ | ○ | ○ | ○ | ○ |
| | Coated sheet (S5) | Coated sheet No. | S5-1 | S5-2 | S5-3 | S5-4 | S5-5 | S5-6 | S5-7 | S5-8 | S5-9 | S5-10 | S5-11 | S5-12 | S5-13 |
| | | FF property | ◎ | ◎ | ◎ | ○ | ○ | ◎ | ○ | ○ | ◎ | ○ | ○ | ◎ | ○ |
| | | Mottling | ◎ | ◎ | ◎ | ○ | ◎ | ◎ | ◎ | ◎ | ◎ | ○ | ○ | ○ | ○ |
| | Coated sheet (S6) | Coated sheet No. | S6-1 | S6-2 | S6-3 | S6-4 | S6-5 | S6-6 | S6-7 | S6-8 | S6-9 | S6-10 | S6-11 | S6-12 | S6-13 |
| | | FF property | ◎ | ◎ | ◎ | ○ | ○ | ◎ | ○ | ○ | ◎ | ○ | ○ | ◎ | ○ |
| | | Mottling | ◎ | ◎ | ◎ | ◎ | ◎ | ◎ | ◎ | ◎ | ◎ | ○ | ◎ | ◎ | ○ |

[Table 3-2]

Table 3 (continued)

| | | Examples | | | | | | | Comparative Examples | | | | | |
|---|---|---|---|---|---|---|---|---|---|---|---|---|---|---|
| | | 30 | 31 | 32 | 33 | 34 | 35 | 36 | 7 | 8 | 9 | 10 | 11 | 12 |
| Brilliant material composition No. | | 14 | 15 | 16 | 1 | 1 | 1 | 1 | 17 | 18 | 19 | 20 | 21 | 22 |
| Dry film thickness (μm) | | 1.0 | 1.0 | 1.0 | 0.3 | 0.7 | 1.5 | 2.5 | 1.0 | 1.0 | 1.0 | 1.0 | 1.0 | 1.0 |
| Coated sheet (S1) | Coated sheet No. | S1-14 | S1-15 | S1-16 | S1-17 | S1-18 | S1-19 | S1-20 | S1-21 | S1-22 | S1-23 | S1-24 | S1-25 | S1-26 |
| | FF property | ○ | ○ | ◎ | ○ | ◎ | ◎ | ○ | - | - | - | △ | △ | × |
| | Mottling | ◎ | ◎ | ◎ | ○ | ◎ | ◎ | ◎ | - | - | - | ○ | △ | × |
| Coated sheet (S2) | Coated sheet No. | S2-14 | S2-15 | S2-16 | S2-17 | S2-18 | S2-19 | S2-20 | S2-21 | S2-22 | S2-23 | S2-24 | S2-25 | S2-26 |
| | FF property | ○ | ○ | ◎ | ○ | ◎ | ◎ | ○ | - | - | - | △ | △ | × |
| | Mottling | ◎ | ◎ | ◎ | ○ | ◎ | ◎ | ◎ | - | - | - | ○ | △ | × |
| Coated sheet (S3) | Coated sheet No. | S3-14 | S3-15 | S3-16 | S3-17 | S3-18 | S3-19 | S3-20 | S3-21 | S3-22 | S3-23 | S3-24 | S3-25 | S3-26 |
| | FF property | ○ | ○ | ◎ | ○ | ◎ | ◎ | ○ | - | - | - | △ | △ | × |
| | Mottling | ◎ | ◎ | ◎ | ○ | ◎ | ◎ | ◎ | - | - | - | ○ | △ | × |
| Coated sheet (S4) | Coated sheet No. | S4-14 | S4-15 | S4-16 | S4-17 | S4-18 | S4-19 | S4-20 | S4-21 | S4-22 | S4-23 | S4-24 | S4-25 | S4-26 |
| | FF property | ○ | ○ | ◎ | ○ | ◎ | ◎ | ○ | - | - | - | △ | △ | × |
| | Mottling | ◎ | ◎ | ◎ | ○ | ◎ | ◎ | ◎ | - | - | - | ○ | △ | × |
| Coated sheet (S5) | Coated sheet No. | S5-14 | S5-15 | S5-16 | S5-17 | S5-18 | S5-19 | S5-20 | S5-21 | S5-22 | S5-23 | S5-24 | S5-25 | S5-26 |
| | FF property | ○ | ○ | ◎ | ○ | ◎ | ◎ | ○ | - | - | - | △ | △ | × |
| | Mottling | ◎ | ◎ | ◎ | ○ | ◎ | ◎ | ◎ | - | - | - | ○ | △ | × |
| Coated sheet (S6) | Coated sheet No. | S6-14 | S6-15 | S6-16 | S6-17 | S6-18 | S6-19 | S6-20 | S6-21 | S6-22 | S6-23 | S6-24 | S6-25 | S6-26 |
| | FF property | ○ | ○ | ◎ | ○ | ◎ | ◎ | ○ | ◎ | ◎ | ◎ | △ | △ | × |
| | Mottling | ◎ | ◎ | ◎ | ○ | ◎ | ◎ | ◎ | △ | △ | △ | ○ | △ | × |

Evaluation

**Claims**

1. A brilliant coating composition comprising water, a scale-like aluminum pigment (A), and nanocellulose (B), wherein the scale-like aluminum pigment (A) has a volume average particle diameter d50 in a range of 0.5 to 8.0 $\mu$m and a volume average particle diameter d90 in a range of 2.0 to 15.0 $\mu$m.

2. The brilliant coating composition according to claim 1, wherein the scale-like aluminum pigment (A) has an average thickness in a range of 1 to 100 nm.

3. The brilliant coating composition according to claim 1 or 2, further comprising an acrylic resin (C).

4. The brilliant coating composition according to any one of claims 1 to 3, wherein the brilliant coating composition is applied by using a liquid discharge head that controls a discharge by varying a relative distance between a valve and a discharge port.

5. The brilliant coating composition according to any one of claims 1 to 4, wherein the nanocellulose (B) contains at least one type selected from cellulose nanofibers (B1) and cellulose nanocrystals (B2).

6. The brilliant coating composition according to any one of claims 1 to 5, wherein the brilliant coating composition has a solid content concentration in a range of 1.0 to 15.0 mass%.

7. A multilayer coating film forming method, comprising:

   step 1: forming a brilliant coating film on a coating object by applying the brilliant coating composition according to any one of claims 1 to 6 onto the coating object by proximally discharging the brilliant coating composition with a liquid discharge head that controls a discharge by varying a relative distance between a valve and a discharge port; and
   step 2: forming a clear coating film by applying a clear coating composition onto the brilliant coating film.

8. The multilayer coating film forming method according to claim 7, wherein the brilliant coating film has a dry film thickness in a range of 0.5 to 2.0 $\mu$m.

## INTERNATIONAL SEARCH REPORT

| International application No. |
|---|
| **PCT/JP2022/040487** |

### A. CLASSIFICATION OF SUBJECT MATTER

***B05D 1/26***(2006.01)i; ***B05D 1/36***(2006.01)i; ***B05D 3/00***(2006.01)i; ***B05D 5/06***(2006.01)i; ***C09D 201/00***(2006.01)i; ***C09D 7/61***(2018.01)i; ***C09D 7/65***(2018.01)i

FI: C09D201/00; B05D3/00 D; B05D1/26 Z; B05D5/06 101A; B05D5/06 C; B05D1/36 Z; C09D7/65; C09D7/61

According to International Patent Classification (IPC) or to both national classification and IPC

### B. FIELDS SEARCHED

Minimum documentation searched (classification system followed by classification symbols)

B05D1/26; B05D1/36; B05D3/00; B05D5/06; C09D201/00; C09D7/61; C09D7/65

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2011-521093 A (ECKART GMBH) 21 July 2011 (2011-07-21)<br>entire text, all drawings | 1-8 |
| A | JP 2017-210553 A (RICOH CO LTD) 30 November 2017 (2017-11-30)<br>entire text, all drawings | 1-8 |
| A | WO 2021/172008 A1 (KONICA MINOLTA INC) 02 September 2021 (2021-09-02)<br>entire text, all drawings | 1-8 |

☐ Further documents are listed in the continuation of Box C.   ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 December 2022** | **10 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

| Patent document cited in search report | | | Publication date (day/month/year) | Patent family member(s) | | | Publication date (day/month/year) |
|---|---|---|---|---|---|---|---|
| JP | 2011-521093 | A | 21 July 2011 | US entire text, all drawings WO EP KR CN | 2011/0094412 2009/144023 2128204 10-2011-0025662 102105539 | A1 A1 A1 A A | |
| JP | 2017-210553 | A | 30 November 2017 | (Family: none) | | | |
| WO | 2021/172008 | A1 | 02 September 2021 | (Family: none) | | | |

International application No.

**PCT/JP2022/040487**

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012210764 A

- JP 2015193143 A